# EUROPÄISCHE PATENTSCHRIFT

(11) **EP 1 648 627 B1**
(45) Veröffentlichungstag und Bekanntmachung des Hinweises auf die Patenterteilung: **22.08.2007**
(21) Anmeldenummer: 04739982.9
(22) Anmeldetag: 17.06.2004
(51) Int. Cl.: B21B 31/07

(54) **VORRICHTUNG ZUM AUF- UND ABZIEHEN EINER STÜTZWALZEN-LAGEREINHEIT**
DEVICE FOR INSTALLING AND REMOVING A ROLLER SUPPORTING A BEARING ASSEMBLY
DISPOSITIF POUR POSER ET DEPOSER UNE UNITE CYLINDRE D'APPUI-PALIER

(30) Priorität: 31.07.2003 DE 10335527
(43) Veröffentlichungstag der Anmeldung: 26.04.2006
(73) Patentinhaber: SMS Demag Aktiengesellschaft, 40237 Düsseldorf (DE)
(72) Erfinder: KELLER, Karl, 57271 Hilchenbach (DE); ROEINGH, Konrad, 57271 Hilchenbach (DE)
(74) Vertreter: Klüppel, Walter
(86) Internationale Anmeldenummer: PCT/EP2004/006523
(87) Internationale Veröffentlichungsnummer: WO 2005/021175

(56) Entgegenhaltungen:
- EP-A- 1 072 333
- WO-A-03/022471
- DE-A- 19 945 070
- DE-A- 19 956 942

## Beschreibung

Die Erfindung betrifft eine Vorrichtung zum Auf- und Abziehen einer aus einem Einbaustück mit einem darin angeordneten Walzenzapfenlager bestehenden Lagereinheit vom Walzenzapfen der Stützwalze eines Walzgerüsts. Eine gattungsgemäße Vorrichtung ist z.B. aus Dokument DE-A 19945070 bekannt.

Es ist seit langem bekannt, Stützwalzen von Walzgerüsten in Lagereinheiten, z. B. Morgoillagern zu lagern. Zum Auf- bzw. Abziehen der Lagereinheiten auf den Walzenzapfen werden verbreitet noch Muttern verwendet, mittels derer die Lagereinheit mechanisch auf den Lagerzapfen aufgezogen werden kann. Zum Abziehen der Lagereinheit wird nach Lösen der mechanischen Muttern die Lagereinheit mittels zwischen dieser und der Walzenflanke eingebrachten Hebel, Keile und dergleichen, oder durch rammen schwerer Gewichte z.B. einer weiteren Walze gegen die Einbaustücke vom Walzenzapfen gelöst.

Es ist aber auch bekannt, die Lagereinheit mit beide Flanken der Mutter umschließende Vorsprüngen auszustatten, so dass beim Aufschrauben der Mutter die Lagereinheit aufgespannt und beim Abschrauben der Mutter die Lagereinheit abgezogen wird. Die hierzu notwendigen großen Kräfte werden oft dadurch aufgebracht, dass die Mutter von einem Kranseil umschlungen wird und durch Anhebebewegung des Krans die Mutter gelöst bzw. festgespannt wird. Diese Methode zum Spannen bzw. Lösen der Mutter ist äußerst gefährlich, da beim Abrutschen des unter Spannung stehenden Kranseils Bedienpersonal verletzt werden kann.

Es sind auch zum Auf- bzw. Abziehen der Lagereinheiten von Walzenzapfen in die Lagereinheit eingebaute hydraulische Auf- und Abziehvorrichtungen bekannt, die ständig in jeder der Lagereinheiten verbleiben und zum Auf- bzw. Abziehen mit externen Hydraulikquellen gekoppelt werden. Diese Vorrichtung zum Auf- und Abziehen der Lagereinheiten sind jedoch sehr aufwendig und teuer. Ein Nachrüsten bestehender Walzen, die lediglich mechanische Muttern zum Auf- und Abziehen verwenden, mit einer derartigen Vorrichtung zum Auf-und Abziehen ist nur mit erheblichen, kostenintensiven Änderungen der Walzenzapfen möglich, und daher nicht rentabel realisierbar.

Weiterhin sind temporär mit der Lagereinheit kuppelbare hydraulische Auf- und Abziehvorrichtungen bekannt, zu derem Anflanschen an den Lagerzapfen jedoch ebenfalls spezielle Ausbildungen der Lagerzapfen notwendig sind.

Der Ersatz der mechanischen Mutter zum Aufziehen von Lagereinheiten durch eine hydraulische Mutter wurde ebenfalls vorgeschlagen. Nach Lösen der hydraulischen Mutter mussten aber auch hier die Lagereinheiten über Hebel, Keile, das beschriebene Rammen usw. vom Walzenzapfen gelöst werden.

Die zunächst beschriebenen mechanischen Muttern zum Aufziehen von Lagereinheiten auf Stützwalzenzapfen werden noch sehr verbreitet eingesetzt. Diese Muttern entsprechen jedoch nicht den geforderten Sicherheitsstandards bezüglich des Aufziehens per Kran sowie des Abziehens per Hebel, Heile, Rammen usw.

Der Erfindung liegt die Aufgabe zugrunde, derartige Auf- und Abziehvorrichtungen durch betriebssicherere Vorrichtungen auszutauschen, ohne dabei an den vorhandenen Walzenzapfen Änderungen bzw. große Änderungen vornehmen zu müssen. Insbesondere sollen reproduzierbare Aufziehkräfte für eine lange, möglichst verschleißfreie Funktion und die Absicherung höchster Rundlaufeigenschaften sowie leicht beherrschbare Abziehkräfte für einen sicheren Betrieb der Walzgerüste sorgen.

Die der Erfindung zugrunde liegende Aufgabe wird durch die Vorrichtung nach Anspruch 1 gelöst.

Dazu wird eine am Walzenzapfen festlegbare Mutter, welche sich vorgespannt an der Lagereinheit abstützt, vorgeschlagen. Diese Aufzieheinheit allein bringt schon den Vorteil, dass die Lagereinheit mit bestimmbarer Vorspannung auf dem Walzenzapfen aufsitzt so dass zwischen Lagereinheit und Walzenzapfen im Betrieb kein Spiel auftritt, wodurch höchste Rundlaufeigenschaften und wenn überhaupt nur minimaler Verschleiß gewährleistet sind.

Bei den bekannten, mechanischen Muttern zum Aufziehen der Lagereinheit auf den Walzenzapfen, oder bei mechanischen Sicherungsmuttem der hydraulischen Muttern wurden die Muttern zunächst fest auf den Walzenzapfen aufgeschraubt. Damit sich die Mutter im Walzbetrieb nicht lösen kann, wurde ein Sicherungselement durch die Mutter in einen in der Lagereinheit vorgesehenen Lochkranz eingebracht. Damit die Lochung der Mutter und der Lochkreis der Lagereinheit übereinstimmten, kam es oft vor, dass die Mutter noch geringfügig zurückgedreht werden musste, um das Sicherungselement einsetzen zu können. Dadurch entstand ein Spiel zwischen Lagereinheit und Walzenzapfen, der zu einem unrunden Lauf sowie einem ungewünschten Verschleiß während des Betriebs führt.

Die erfindungsgemäß vorgeschlagene vorgespannte Mutter wird wie folgt verspannt. Zunächst wird über ein hydraulisches Vorspannwerkzeug die Lagereinheit auf den Walzenzapfen aufzogen. Die Kraft des hydraulischen Vorspannwerkzeuges wird so bemessen, dass ein Spannanker vorgespannt wird. Nachdem die Mutter angestellt worden ist, wird das hydraulische Vorspannwerkzeug drucklos geschaltet. Die Vorspannung des Spannankers wird nun vom mit dem Walzenzapfen fest verbundenen Spannanker über die Mutter auf die Lagereinheit übertragen.

Zum Abziehen einer Lagereinheit vom Walzenzapfen der Stützwalze eines Walzgerüstes wird erfindungsgemäß eine Abzieheinheit vorgeschlagen, die temporär mit der Lagereinheit kuppelbar ist und deren Hydraulikzylinder sich am Walzenzapfen, oder aber am mit diesem fest verbundenen Spannanker abstützen kann.

Dabei kann die Abzieheinheit z. B. mit der Endplatte der Lagereinheit verschraubt werden. Es besteht aber auch die Möglichkeit, die Lagereinheit und die Abzieheinheit mit einem Bajonettverschluss zu versehen oder aber die Abzieheinheit mit Krallen zu versehen, welche Bereiche der Lagereinheit hintergreifen können.

Als Vorteil hat sich dabei erwiesen, dass die Abzieheinheit derart an der Lagereinheit angreift, dass eine einheitliche Kupplungsmöglichkeit mit den beiden, in der Regel unterschiedliche Innenabmessungen aufweisende Lagereinheiten einer Walze möglich ist, so dass die Abzieheinheit universell für beide Seiten einer Walze einsetzbar ist.

Es besteht die Möglichkeit, die Abzieheinheit auch mit einer bekannten Hydraulikmutter, oder sogar mit einer bekannten mechanischen Mutter zum Aufziehen der Lager auf den Walzenzapfen zu betreiben. Besonders vorteilhaft ist jedoch, wenn neben der erfindungsgemäßen Abzieheinheit auch die erfindungsgemäße Aufziehvorrichtung zum Einsatz kommt.

Die Erfindung wird anhand der Beschreibung einer Zeichnung näher erläutert. Dabei zeigen:
- Figur 1: die erfindungsgemäße Auf- und Abziehvorrichtung und
- Figur 2: eine erfindungsgemäße Abziehvorrichtung in Kombination mit einer bekannten Hydraulikmutter.

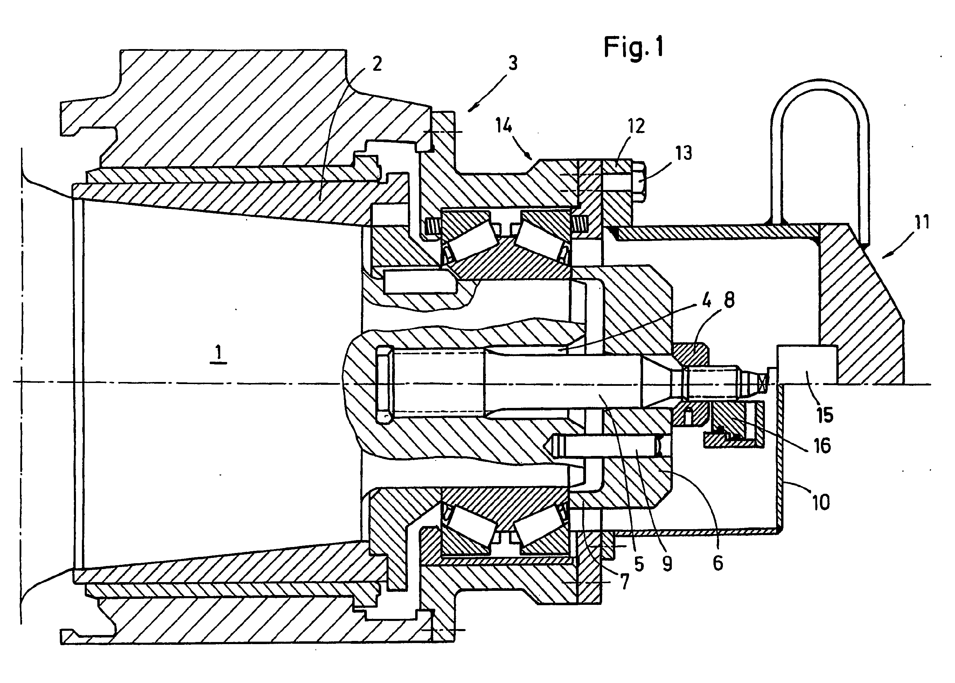

Der Figur 1 ist ein Walzenzapfen 1 zu entnehmen, auf dem die Zapfenbuchse 2 einer Lagereinheit 3 aufgezogen ist. Im Endbereich des Walzenzapfens 1 weist dieser eine Bohrung 4 auf, in die ein Innengewinde eingebracht ist. Ein Spannanker 5 ist verdrehfest mit seinem Außengewinde in das Innengewinde der Bohrung 4 verschraubt. Dabei kann, insbesondere bei aus Gußwerkstoff bestehenden Walzenzapfen, die Fehlerstellen aufweisen können, ein Spezialgewinde zum Einsatz kommen, durch welches eine gleichmäßige Aufteilung der Zugkräfte auf die einzelnen Gewindegänge erreicht wird. Auf dem Spannanker 5 ist eine topfförmig ausgebildete Überwurf-Scheibe 6 axial verschiebbar angeordnet, wobei sich der Rand 7 der topfförmigen Überwurf-Scheibe 6 an der Lagereinheit 3, hier dem Axiallager der Lagereinheit 3 abstützt. An dem in den Walzenzapfen 1 eingeschraubten entgegensetzten Ende des Spannankers 5 weist dieser ein weiteres Außengewinde auf, auf dem eine Mutter 8 aufgesetzt ist. Der Mutter 8 ist wie in der Figur 1 dargestellt ein hydraulisches Vorspannwerkzeug 16 temporär zuordenbar.

Diese vorspannbare Aufzievorrichtung arbeitet wie folgt: Das hydraulische Vorspannwerkzeug 16 stützt sich an dem Spannganker 5 ab und bewegt die Überwurf-Scheibe 6 gegen die Lagereinheit 3. Dabei wird die Zapfenbuchse 2 der Lagereinheit 3 auf den Walzenzapfen 1 aufgeschoben. Sitzt die Zapfenbuchse 2 fest auf dem Walzenzapfen 1, so wird noch weiter Druck auf das hydraulische Vorspannwerkzeug 16 gegeben, so dass sich der Spannanker 5 elastisch dehnt. Nach Erreichen einer vorgegebenen elastischen Dehnung wird die Mutter 8 gegen die Überwurf-Scheibe 6 angestellt. Nachdem der Hydraulikdruck vom hydraulischen Vorspannwerkzeug 16 abgeschaltet worden ist, zieht der mit dem Walzenzapfen 1 fest verbundene Spannanker 5 über die Mutter 8 und die Überwurf-Scheibe 6 die Lagereinheit 3 mit der entsprechend eingestellten elastischen Vorspannung des Spannankers auf den Walzenzapfen 1. Die im Betrieb permanent zwischen Spannanker 5 und Mutter 8 wirkende Vorspannkraft bewirkt dabei, dass die Mutter 8 selbsthemmend verdrehgesichert ist.

Die Überwurf-Scheibe 6 weist eine Verdrehsicherung 9 auf, so dass sich während des Walzbetriebes weder die Überwurf-Scheibe 6 noch die Mutter 8 lösen können. Damit ist eine reproduzierbare Aufziehkraft durch den hydraulisch vorgespannten Spannanker 5 gegeben. Das hydraulische Vorspannwerkzeug 16 wird durch externe Hydraulikpumpen einfach und sicher bedient. Die Verbindung zwischen Walzenzapfen 1 und Lagereinheit 3 bleibt durch den Spannanker 5 unter Kraftschluss. Dadurch wird eine hochwertigere Verspannung der Lagereinheit mit dem Walzenzapfen als nach dem Stand der Technik erreicht, die hohe Rundlaufeigenschaften und eine verschleißfreie Verbindung gewährleistet.

Eine Änderung an der Außenkontur der Walzenzapfenmantels beim Umrüsten einer z.B. mit einer mechanischen oder aber einer hydraulischen Mutter versehenen Aufziehvorrichtung gegen eine erfindungsgemäße Aufziehvorrichtung ist nicht erforderlich.

Figur 1 zeigt weiterhin eine Abdeckung 10, die während des Betriebs die Lagereinheit 3 schützt und die für ein Auf- bzw. Abziehen der Lagereinheit 3 abschwenkbar bzw. abnehmbar ist.

Weiterhin ist eine Abziehvorrichtung 11 gezeigt, die topfartig ausgebildet ist und deren Rand 12 mit der Lagereinheit 3 zum Zwecke des Abziehens der Lagereinheit vom Walzenzapfen 1 über Schrauben 13 verschraubbar ist. Hier sind auch andere Lösungen möglich. Der Rand 12 könnte z. B. mit nicht dargestellten Krallen ausgestattet sein, welche die Lagereinheit 3 im Bereich des Rükkens 14 hintergreifen.

Die Abzieheinheit 11 weist einen Hydraulikzylinder 15 auf, der sich in Figur 1 an dem fest mit dem Walzenzapfen 1 verbundenen Spannanker 5 abstützt.

Nach Lösen der Mutter 8 kann über den Hydraulikzylinder 15 eine Abziehkraft zwischen Walzenzapfen 1 und Lagereinheit 3 aufgebracht werden. Dadurch ist ein sicheres und einfaches Abziehen der Lagereinheit 3 vom Walzenzapfen möglich. Unkontrollierbare Rammvorgänge sind nicht notwendig.

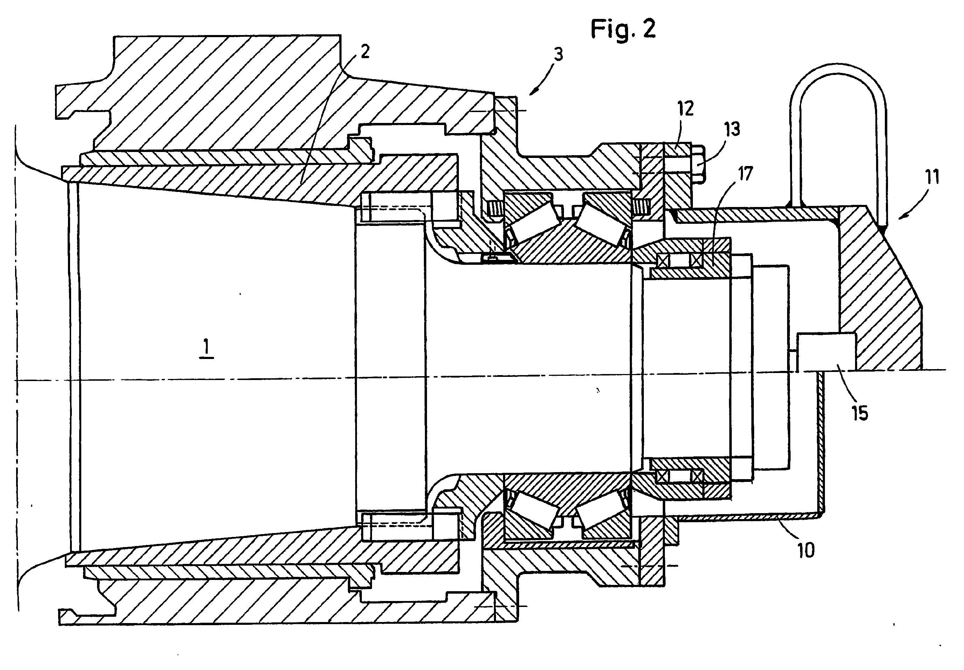

Figur 2 zeigt die Abzieheinheit 11 in Verbindung mit einer handelsüblichen Hydraulikmutter 17, die anstelle auf einem Spannanker 5 auf dem Walzenzapfen 1 festlegbar ist. Bei diesem Einsatz muss am Walzenzapfen 1, auch an dessen Stirnseite, keine Änderung vorgenommen werden. Die bekannten Muttern zum Aufziehen von Lagereinheiten auf Walzenzapfen, die hier slbstverständlich auch noch anwendung finden können, müssen lediglich durch die Hydraulikmutter 17 ersetzt werden. Zum Abziehen greift hier der Hydraulikzylinder 15 an der Stirnseite des Walzenzapfens 1 an.

### Bezugszeichenübersicht

- 1: Walzenzapfen
- 2: Zapfenbuchse
- 3: Lagereinheit
- 4: Bohrung
- 5: Spannanker
- 6: Überwurf-Scheibe
- 7: Rand
- 8: Hydraulikmutter
- 9: Verdrehsicherung
- 10: Abdeckung
- 11: Abzieheinheit
- 12: Rand
- 13: Schraube
- 14: Rücken
- 15: Hydraulikzylinder
- 16: Hydraulisches Vorspannwerkzeug
- 17: Hydraulikmutter

## Patentansprüche

1. Vorrichtung zum Auf bzw. Abziehen einer aus einem Einbaustück mit einem darin angeordneten Walzenzapfenlager bestehenden Lagereinheit (3) auf den Walzenzapfen (1) der Stützwalze eines Walzgerüstes, bzw. vom Walzenzapfen (1) der Stützwalze des Walzgerüstes,
**dadurch gekennzeichnet,**
**dass** ein sich in axialer Richtung der Walze erstreckender Spannanker (5) am Walzenzapfen (1) angreift, dass der Spannanker (5) eine auf diesem axial verschiebbare Überwurf-Scheibe (6) trägt, die sich einerseits an einer auf dem Spannanker (5) schraubbewegbaren Mutter (8) und andererseits an der Lagereinheit (3) abstützt, und dass der Mutter (8) ein hydraulisches Vorspannwerkzeug (16) temporär zuordenbar ist, über welches eine Aufziehkraft zwischen Spannanker (5) und der sich an der Lagereinheit (3) abstützenden Überwurf-Scheibe (6) aufbringbar ist, und dass eine Abzieheinheit (11) temporär mit der Lagereinheit (3) kuppelbar ist und dass sich ein Hydraulikzylinder (15) der Abzieheinheit (11) am Walzenzapfen (1) abzustützen vermag.

2. Vorrichtung nach Anspruch 1,
**dadurch gekennzeichnet,**
**dass** die Mutter (8) bei vorgespanntem Spannanker (5) gegen die Überwurf-Scheibe (6) anstellbar, und durch die Spannkräfte zwischen Spannanker (5) und Mutter (8) selbsthemmend verdrehgesichert ist.

3. Vorrichtung nach Anspruch 1 oder 2,
**dadurch gekennzeichnet,**
**dass** der Überwurf-Scheibe (6) eine Verdrehsicherung (9) zugeordnet ist.

4. Vorrichtung nach einem der Ansprüche 1 bis 3,
**dadurch gekennzeichnet,**
**dass** das hydraulische Vorspannwerkzeug (16) bei Stillstand der Walze an den Spannanker (5) ankuppelbar ist und von einer externen Hydraulikquelle angetrieben gegen die Überwurf-Scheibe (6) anstellbar ist.

5. Vorrichtung nach einem der Ansprüche 1 bis 4,
**dadurch gekennzeichnet,**
**dass** die Abzieheinheit (11) universell für die beiden Lager einer Walze einsetzbar ist.

6. Vorrichtung nach einem der Ansprüche 1 bis 5,
**dadurch gekennzeichnet,**
**dass** die Abzieheinheit (11) mit der Lagereinheit (3) verschraubbar ist.

7. Vorrichtung nach der Ansprüche 1 bis 5,
**dadurch gekennzeichnet,**
**dass** die Abzieheinheit (11) über einen Bajonettverschluss mit der Lagereinheit (3) kuppelbar ist.

8. Vorrichtung nach der Ansprüche 1 bis 5,
**dadurch gekennzeichnet,**
**dass** die Abzieheinheit (11) die Lagereinheit (3) hintergreifende Krallen auf weist.

9. Vorrichtung nach einem der Ansprüche 1 bis 8,
**dadurch gekennzeichnet,**
**dass** sich der Hydraulikzylinder (15) an dem fest mit dem Walzenzapfen 1 verbundenen Spannanker 5 abstützt.

10. Vorrichtung nach einem der Ansprüche 1 bis 9,
**gekennzeichnet durch**
dass das Vorspannwerkzeug (16) und die Abzieheinheit (11) getrennt voneinander mit der Lagereinheit (3) kuppelbar ist.

## Claims

1. Device for drawing on or drawing off a bearing unit (3), which consists of a chock with a roll pin bearing arranged therein, onto the roll pin (1) of the backing roll of a roll stand or from the roll pin (1) of the backing roll of the roll stand, **characterised in that** a clamping anchor (5), which extends in axial direction of the roll, engages the roll pin (1), that the clamping anchor (5) carries a cap washer (6), which is axially displaceable on this anchor and which is supported at one side against a nut (8) threadedly movable on the clamping anchor (5) and at the other side against the bearing unit (3), and that a hydraulic biasing tool (16), by way of which a drawing-on force can be exerted between clamping anchor (5) and the cap washer (6) supported against the bearing unit (3), can be temporarily associated with the nut (8), and that a drawing-off unit (11) is temporarily couplable with the bearing unit (3) and that a hydraulic cylinder (15) of the drawing-off unit (11) is capable of being supported on the roll pin (1).

2. Device according to claim 1, **characterised in that** the nut (8) is adjustable against the cap washer (6) when the clamping anchor (5) is biased and is rotationally secured in self-locking manner by the clamping forces between clamping anchor (5) and nut (8).

3. Device according to claim 1 or 2, **characterised in that** a rotational securing means (9) is associated with the cap washer (6).

4. Device according to one of claims 1 to 3, **characterised in that** the hydraulic biasing tool (16) can be coupled with the clamping anchor (5) when the roll is at standstill and is adjustable, driven by an external hydraulic source, against the cap washer (6).

5. Device according to one of claims 1 to 4, **characterised in that** the drawing-off unit (11) is universally usable for both bearings of a roll.

6. Device according to one of claims 1 to 5, **characterised in that** the drawing-off unit (11) is screw-connectible with the bearing unit (3).

7. Device according to claims 1 to 5, **characterised in that** the drawing-off unit (11) is couplable with the bearing unit (3) by way of a bayonet lock.

8. Device according to one of claims 1 to 5, **characterised in that** the drawing-off unit (11) has claws engaging behind the bearing unit (3).

9. Device according to one of claims 1 to 8, **characterised in that** the hydraulic cylinder (15) is supported against the clamping anchor (5) fixedly connected with the roll pin (1).

10. Device according to one of claims 1 to 9, **characterised in that** the biasing tool (16) and the drawing-off unit (11) are couplable with the bearing unit (3) separately from one another.

## Revendications

1. Dispositif pour monter une unité à palier (3), formée par une empoise avec un palier pour tourillon de cylindre qui y est disposé, sur le tourillon (1) du cylindre d'appui d'une cage de laminage ou pour la retirer du tourillon (1) du cylindre d'appui de la cage de laminage, **caractérisé en ce qu'**un tirant de serrage (5) s'étendant dans le sens axial du cylindre s'agrippe au tourillon (1) du cylindre, **en ce que** le tirant de serrage (5) porte une plaque-chapeau (6) pouvant être déplacée axialement sur celui-ci, qui s'appuie d'une part sur un écrou (8) pouvant être déplacé par vissage sur le tirant de serrage (5) et d'autre part sur l'unité à palier (3) et **en ce que** l'écrou (8) peut être associé temporairement à un outil de pré-serrage (16) hydraulique, via lequel une force de traction peut être appliquée entre le tirant de serrage (5) et la plaque-chapeau (6) s'appuyant sur l'unité à palier (3) et **en ce qu'**une unité de retrait (11) peut être couplée temporairement avec l'unité à palier (3) et **en ce qu'**un vérin hydraulique (15) peut appuyer l'unité de retrait (11) sur le tourillon (1) du cylindre.

2. Dispositif selon la revendication 1, **caractérisé en ce que** l'écrou (8) peut être réglé, lorsque le tirant de serrage (5) est pré-serré, contre la plaque-chapeau (6) et est assuré par auto-serrage contre une rotation par les forces de traction entre le tirant de serrage (5) et l'écrou (8).

3. Dispositif selon la revendication 1 ou 2, **caractérisé en ce que** la plaque-chapeau (6) est associée à un dispositif de protection contre une rotation (9).

4. Dispositif selon l'une quelconque des revendications 1 à 3, **caractérisé en ce que** l'outil de pré-serrage (16) hydraulique peut être couplé au tirant de serrage (5) lorsque le cylindre est à l'arrêt et peut être réglé contre la plaque-chapeau (6) en étant entraîné par une source hydraulique externe.

5. Dispositif selon l'une quelconque des revendications 1 à 4, **caractérisé en ce que** l'unité de retrait (11) peut être utilisée universellement pour les deux paliers d'un cylindre.

6. Dispositif selon l'une quelconque des revendications 1 à 5, **caractérisé en ce que** l'unité de retrait (11) peut être vissée sur l'unité à palier (3).

7. Dispositif selon l'une quelconque des revendications 1 à 5, **caractérisé en ce que** l'unité de retrait (11) peut être couplée à l'unité à palier (3) via un raccord à baïonnette.

8. Dispositif selon l'une quelconque des revendications 1 à 5, **caractérisé en ce que** l'unité de retrait (11) présente des griffes s'agrippant derrière l'unité à palier (3).

9. Dispositif selon l'une quelconque des revendications 1 à 8, **caractérisé en ce que** le vérin hydraulique (15) s'appuie sur le tirant de serrage (5) relié de manière fixe au tourillon (1) de cylindre.

10. Dispositif selon l'une quelconque des revendications 1 à 9, **caractérisé en ce que** l'outil de pré-serrage (16) et l'unité de retrait (11) peuvent être couplés séparément avec l'unité à palier (3).
